# EUROPÄISCHE PATENTSCHRIFT

(11) **EP 3 775 786 B1**
(45) Veröffentlichungstag und Bekanntmachung des Hinweises auf die Patenterteilung: **07.06.2023**
(21) Anmeldenummer: 19710401.1
(22) Anmeldetag: 11.03.2019
(51) Int. Cl.: G01D 5/245, G01D 5/20, G01D 5/24, G01L 3/10, G01D 5/241, G01D 5/54

(54) **VORRICHTUNG ZUR BESTIMMUNG EINES DREHWINKELS UND/ODER EINES DREHMOMENTS SOWIE VERFAHREN ZUM BETRIEB DER VORRICHTUNG**
DEVICE FOR DETERMINING A ROTATION ANGLE AND/OR A TORQUE AND METHOD FOR OPERATING THE DEVICE
DISPOSITIF POUR DÉTERMINER UN ANGLE DE ROTATION ET/OU UN COUPLE ET PROCÉDÉ POUR FAIRE FONCTIONNER CE DISPOSITIF

(30) Priorität: 28.03.2018 DE 102018107416
(43) Veröffentlichungstag der Anmeldung: 17.02.2021
(73) Patentinhaber: HELLA GMBH & CO. KGAA, 59552 Lippstadt (DE)
(72) Erfinder: IRLE, Henning, 59557 Lippstadt (DE); UTERMÖHLEN, Fabian, 59557 Lippstadt (DE)
(86) Internationale Anmeldenummer: PCT/EP2019/055995
(87) Internationale Veröffentlichungsnummer: WO 2019/185338

(56) Entgegenhaltungen:
- DE-A1-102006 043 283
- DE-A1-102015 111 315
- FR-A1- 3 027 103

## Beschreibung

Die vorliegende Erfindung bezieht sich auf eine Vorrichtung zur Bestimmung eines Drehwinkels und/oder eines Drehmoments eines sich drehenden Teils, umfassend mindestens ein Winkelerfassungsmittel zur Erfassung einer Winkelstellung des sich drehenden Teils relativ zu einer Referenzposition und mindestens ein Indexierungsmittel zum Indexieren bei einer vorher festgelegten Drehung, bevorzugt einer 360°-Drehung, des drehenden Teils relativ zu der Referenzposition der im Oberbegriff des Anspruchs 1 genannten Art. Ferner betrifft die Erfindung ein Verfahren nach Anspruch 4 zum Betrieb der erfindungsgemäßen Vorrichtung.

Derartige Vorrichtungen zur Bestimmung eines Drehwinkels und/oder eines Drehmoments eines sich drehenden Teils sowie Verfahren zu deren Betrieb sind aus dem Stand der Technik in zahlreichen Ausführungsvarianten bereits bekannt. Beispielsweise ist aus der EP 2 383 558 A1 ein induktiver Winkelsensor zur Bestimmung von Drehmoment und relativer Winkelstellung bezüglich einer Referenzposition, umfassend Mittel zum Erfassen von Winkeln und Differenzwinkeln sowie Mittel zum Indexieren bei Durchfahren der Referenzposition mit einem Dauermagneten und einem Hall-Sensor, bekannt. Um einen preiswert und kompakt herstellbaren Drehmomentsensor mit Winkelbestimmung und Indexierung zu schaffen, wird vorgeschlagen, dass dem Hall-Sensor ein Flussleitblech zugeordnet ist, das in der Referenzposition den Fluss des Dauermagneten zu dem Hall-Sensor leitet. Ferner ist aus der FR 3 027 103 A1 eine Vorrichtung zur Bestimmung eines Drehwinkels und/oder eines Drehmoments eines sich drehenden Teils bekannt, umfassend mindestens ein als induktiver Sensor ausgebildetes Winkelerfassungsmittel zur Erfassung einer Winkelstellung des sich drehenden Teils relativ zu einer Referenzposition und mindestens ein als ein induktiver Sensor ausgebildetes Indexierungsmittel zum Indexieren bei einer vorher festgelegten Drehung, bevorzugt einer 360°-Drehung, des drehenden Teils relativ zu der Referenzposition, wobei das Winkelerfassungsmittel mit einem mit dem drehenden Teil drehfest verbundenen Rotor, mit einem Grundkörper zur Befestigung an dem drehenden Teil und mehreren sich von dem Grundkörper radial nach außen erstreckenden Flügeln, zusammenwirkt, und wobei mindestens einer der Flügel des Rotors eine mittels des Indexierungsmittels detektierbare Markierung aufweist.

Ferner ist aus der DE 10 2006 043 283 A1 eine Messanordnung zur Messung einer Drehbewegung eines Rotors bekannt, wobei der Rotor Schaufelelemente aufweist, welche auf dem Umfang des Rotors angeordnet sind, und wobei wenigstens ein Sensor vorgesehen ist, welcher Messsignale zur elektronischen Weiterverarbeitung ausgibt, und wenigstens eine Maßverkörperung am Rotor ausgebildet ist, die mittels des Sensors durch die Drehbewegung periodisch erfassbar ist, wobei die Maßverkörperung durch wenigstens ein modifiziertes Schaufelelement gebildet ist, welches einen endseitig gekürzten Bereich aufweist, und wobei der Sensor beim Vorbeilauf der Schaufelelemente ein jeweils etwa gleiches Messsignal ausgibt und beim Vorbeilauf des modifizierten Schaufelelementes ein modifziertes Messsignal ausgibt.

Schließlich ist aus der DE 10 2015 111 315 A1 eine Vorrichtung zur Übertragung von Drehmomenten bekannt, umfassend eine Rutschkupplung, die ein antriebseitiges Anschlusselement und ein unter Gestattung von Schlupf reibschlüssig mit diesem verbundenes, abtriebseitiges Anschlusselement aufweist, wobei die beiden Anschlusselemente ein Verschleiß unterliegendes Reibflächenpaar ausbilden, und wobei dem Reibflächenpaar ein Verschleißgrenzwert zugeordnet ist, der einem Gesamtrutschwinkel entspricht oder einen Gesamtrutschwinkel berücksichtigt, und wobei eine Einrichtung zur Erfassung eines Rutschwinkels vorgesehen ist, die den Gesamtrutschwinkel errechnet und/oder überwacht, und/oder wobei eine Einrichtung zur Erfassung einer Rutschgeschwindigkeit vorgesehen ist, die eine Rutschgeschwindigkeit misst und/oder errechnet oder überwacht.

Hier setzt die vorliegende Erfindung an.

Der vorliegenden Erfindung liegt die Aufgabe zugrunde, eine Vorrichtung zur Bestimmung eines Drehwinkels und/oder eines Drehmoments eines sich drehenden Teils sowie ein Verfahren zu deren Betrieb zu verbessern.

Diese Aufgabe wird durch eine Vorrichtung zur Bestimmung eines Drehwinkels und/oder eines Drehmoments eines sich drehenden Teils mit den Merkmalen des Anspruchs 1 gelöst, das dadurch gekennzeichnet ist, dass das Indexierungsmittel als ein kapazitiver Sensor ausgebildet ist und ein einziger Flügel des Rotors eine mittels des Indexierungsmittels detektierbare Markierung aufweist, wobei ein einziger Flügel eine von einem umlaufenden Rand begrenzte Öffnung als die mittels des Indexierungsmittels detektierbare Markierung aufweist oder alle Flügel bis auf einen einzigen Flügel, als die mittels des Indexierungsmittels detektierbare Markierung, eine von einem umlaufenden Rand begrenzte Öffnung aufweisen. Ferner wird diese Aufgabe durch ein Verfahren zum Betrieb einer derartigen Vorrichtung mit den Merkmalen des Anspruchs 4 gelöst, wonach in Abhängigkeit der Detektierung der mittels des Indexierungsmittels detektierbaren Markierung in einer Auswerteeinheit eine vorher festgelegte Drehung, bevorzugt eine 360°-Drehung, des drehenden Teils relativ zu der Referenzposition ermittelt wird und wobei zur Ermittlung einer vorher festgelegten Drehung, bevorzugt einer 360°-Drehung, des drehenden Teils relativ zu der Referenzposition in der Auswerteeinheit mindestens eine Resonanzfrequenz mindestens eines Schwingkreises ausgewertet wird. Die Unteransprüche betreffen vorteilhafte Weiterbildungen der Erfindung.

Ein wesentlicher Vorteil der Erfindung zur Bestimmung eines Drehwinkels und/oder eines Drehmoments eines sich drehenden Teils liegt insbesondere darin, dass der Aufbau der erfindungsgemäßen Vorrichtung konstruktiv und schaltungstechnisch vereinfacht ist. Darüber hinaus ist die erfindungsgemäße Vorrichtung platzsparender und damit kompakter realisierbar. Bei den vorgenannten Sensoren handelt es sich um erprobte und in einer Vielzahl von Bauformen erhältliche Sensoren. Erfindungsgemäß werden voneinander verschiedene Sensoren, also voneinander verschiedene Sensorprinzipien, gleichzeitig eingesetzt. Zum einen ist hierdurch eine Redundanz realisiert. Zum anderen ist damit eine ungewünschte Wechselwirkung zwischen mehreren Sensoren, wirksam verhinderbar. Entsprechend ermöglicht die Verwendung eines Winkelerfassungsmittels, das nach einem ersten Sensorprinzip arbeitet, und die Verwendung eines Indexierungsmittels, das nach einem von dem ersten Sensorprinzip verschiedenen zweiten Sensorprinzip arbeitet, eine wirksame Verhinderung einer ungewünschten Wechselwirkung zwischen dem Winkelerfassungsmittel auf der einen Seite und dem Indexierungsmittel auf der anderen Seite.

Grundsätzlich sind die Flügel des Rotors nach Art, Form, Material, Dimensionierung, Anordnung und Anzahl in weiten geeigneten Grenzen frei wählbar. Erfindungsgemäß weist lediglich ein einziger Flügel eine mittels des Indexierungsmittels detektierbare Markierung auf. Hierdurch ist eine eineindeutige Indexierung auf einfache Weise realisiert.

Das Winkelerfassungsmittel und das Indexierungsmittel sind ebenfalls nach Art, Funktionsweise, Form, Material, Dimensionierung, Anordnung und Anzahl in weiten geeigneten Grenzen frei wählbar. Entsprechend lässt sich die Erfindung bei einer Vielzahl von voneinander verschiedenen Anwendungsfällen vorteilhaft einsetzen.

Erfindungsgemäß ist es ferner vorgesehen, dass ein einziger Flügel eine von einem umlaufenden Rand begrenzte Öffnung aufweist oder alle Flügel bis auf einen einzigen Flügel eine von einem umlaufenden Rand begrenzte Öffnung aufweisen. Auf diese Weise ist die erfindungsgemäße Vorrichtung besonders einfach realisierbar.

Eine vorteilhafte Weiterbildung der erfindungsgemäßen Vorrichtung, wobei das Winkelerfassungsmittel und das Indexierungsmittel jeweils zumindest teilweise auf einer gemeinsamen Leiterplatte angeordnet sind, sieht vor, dass die Leiterplatte als eine mehrlagige Leiterplatte ausgebildet ist und das Winkelerfassungsmittel auf mindestens einer ersten Lage der Leiterplatte und das Indexierungsmittel auf mindestens einer von der ersten Lage verschiedenen zweiten Lage der Leiterplatte angeordnet ist. Hierdurch ist der Aufbau der erfindungsgemäßen Vorrichtung weiter vereinfacht. Zum anderen ist der Platzbedarf mittels der Verwendung einer mehrlagigen Leiterplatte weiter reduziert und die erfindungsgemäße Vorrichtung noch kompakter realisierbar.

Eine vorteilhafte Weiterbildung der letztgenannten Ausführungsform der erfindungsgemäßen Vorrichtung sieht vor, dass mindestens eine der mindestens einen zweiten Lage als eine Abschirmung ausgebildet ist. Auf diese Weise ist eine ungewünschte Wechselwirkung zwischen dem mindestens teilweise auf der mindestens einen ersten Lage angeordneten Winkelerfassungsmittel und dem mindestens teilweise auf der mindestens einen zweiten Lage angeordneten Indexierungsmittel weiter reduziert oder gar verhindert. Die Abschirmung kann darüber hinaus dazu ausgebildet sein, um das Winkelerfassungsmittel und/oder das Indexierungsmittel vor ungewünschten Wechselwirkungen mit Drittbauteilen oder Drittgeräten zu schützen.

Eine vorteilhafte Weiterbildung des erfindungsgemäßen Verfahrens sieht vor, dass in der Auswerteeinheit mindestens eine Resonanzfrequenzdifferenz von zwei Schwingkreisen ausgewertet wird.

Anhand der beigefügten, grob schematischen Zeichnung wird die Erfindung nachfolgend näher erläutert. Dabei zeigt:
- Fig. 1: ein erstes Ausführungsbeispiel der erfindungsgemäßen Vorrichtung in einer teilweisen Ansicht, mit einer Draufsicht auf einen Rotor,
- Fig. 2: eine exemplarische Darstellung einer mehrlagigen Leiterplatte bei dem ersten Ausführungsbeispiel,
- Fig. 3: ein exemplarisch dargestellter Stromfluss bei dem ersten Ausführungsbeispiel und
- Fig. 4: ein zweites Ausführungsbeispiel der erfindungsgemäßen Vorrichtung in einer teilweisen Ansicht, mit einer Draufsicht auf einen Rotor.

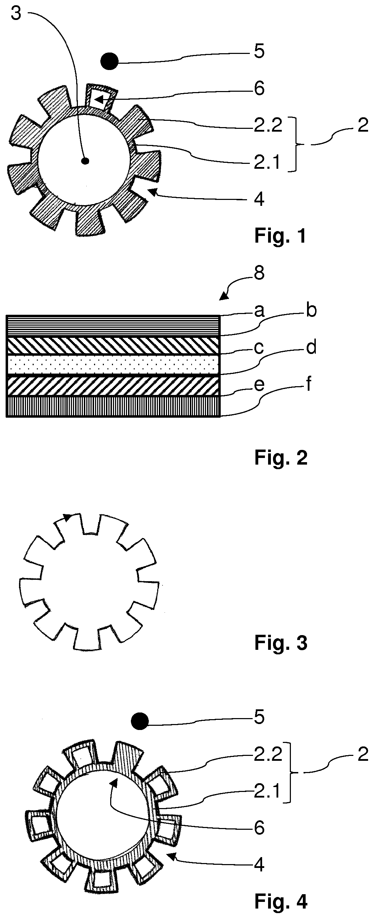

In Fig. 1 ist ein erstes Ausführungsbeispiel einer erfindungsgemäßen Vorrichtung in einer teilweisen Ansicht dargestellt. Die Vorrichtung ist zur Bestimmung eines Drehwinkels und eines Drehmoments eines sich drehenden Teils, nämlich einer Lenkwelle einer nicht dargestellten Servolenkung für ein Kraftfahrzeug, ausgebildet. Die Vorrichtung umfasst zwei jeweils als ein induktiver Sensor ausgebildete Winkelerfassungsmittel zur Erfassung jeweils einer Winkelstellung des sich drehenden Teils relativ zu einer Referenzposition und ein Indexierungsmittel zum Indexieren bei einer 360°-Drehung des drehenden Teils relativ zu der Referenzposition, wobei die Winkelerfassungsmittel jeweils mit einem mit dem drehenden Teil drehfest verbundenen Rotor, mit einem Grundkörper zur Befestigung an dem drehenden Teil und mehreren sich von dem Grundkörper radial nach außen erstreckenden Flügeln, zusammenwirken. In Fig. 1 ist lediglich eines der beiden Winkelerfassungsmittel teilweise dargestellt, nämlich dessen Rotor 2, mit dem Grundkörper 2.1 und den Flügeln 2.2. Die Referenzposition ist in der Fig. 1 mittels eines Punktes 5 symbolisiert. Das Indexierungsmittel sowie das drehende Teil, also die Lenkwelle, sind nicht dargestellt.

Das drehende Teil, also die Lenkwelle, ist auf dem Fachmann bekannte Weise in zwei Teile geteilt, wobei der eine Teil der Lenkwelle mit dem Rotor 2 und der andere Teil der Lenkwelle mit dem anderen nicht dargestellten Rotor drehfest verbunden ist. Das Indexierungsmittel ist einem der beiden Teile der Lenkwelle zugeordnet. Die beiden Teile der Lenkwelle sind mittels eines Torsionsstabs miteinander auf dem Fachmann bekannte Weise kraftübertragend verbunden. In Fig. 1 ist lediglich der Rotor 2 dargestellt, der mit dem Winkelerfassungsmittel zusammenwirkt, das mit dem Indexierungsmittel demselben Teil der Lenkwelle zugeordnet ist. Jeder Rotor 2 ist aus einem für eine induktive Kopplung geeigneten Metallblech einstückig hergestellt. Der in Fig. 1 dargestellte Rotor 2 weist insgesamt neun Flügel 2.2 auf, die sich vom Grundkörper 2.1 radial nach außen erstrecken. Zwischen den einzelnen Flügeln 2.2 ist jeweils eine Lücke 4 ausgebildet. Die Flügel 2.2 sind um den Umfang des Grundkörpers 2.1 des Rotors 2 regelmäßig angeordnet. Wie aus Fig. 1 ersichtlich ist, weist einer der Flügel 2.2 des Rotors 2 eine von einem umlaufenden Rand begrenzte Öffnung 6 auf. Diese Öffnung 6 ist eine mittels des Indexierungsmittels detektierbare Markierung 6.

Der Rotor, der mit dem anderen, nicht dargestellten, Winkelerfassungsmittel zusammenwirkt, weist insgesamt achtzehn Flügel auf. Dieser Rotor weist keine mittels eines Indexierungsmittels oder des Indexierungsmittels detektierbare Markierung, beispielsweise in Form einer von einem Rand begrenzten Öffnung in einem von dessen Flügeln, auf. Mittels einer dem Fachmann bekannten Differenzwinkelbestimmung zwischen dem in Fig. 1 teilweise dargestellten Winkelerfassungsmittel und dem nicht dargestellten Winkelerfassungsmittel ist das Drehmoment, mit dem die Lenkwelle beaufschlagt ist, bestimmbar. Der Drehwinkel der Lenkwelle wird mittels des in der Fig. 1 teilweise dargestellten Winkelerfassungsmittels ermittelt. Das Indexierungsmittel dient beispielsweise dazu, auch Drehwinkel von 360° und mehr zu detektieren. Dies ist beispielsweise bei Nutzfahrzeugen wie LKW's oder dergleichen erforderlich.

Jedes der Winkelerfassungsmittel weist neben dem Rotor, beispielsweise Rotor 2, auch einen Stator auf. Der Stator ist auf dem Fachmann bekannte Weise aufgebaut und weist mindestens eine Erregerspule und mindestens eine Sensorspule auf. Der jeweilige Stator ist bei dem vorliegenden Ausführungsbeispiel auf einer einzigen mehrlagigen Leiterplatte 8 angeordnet, die in Fig. 2 exemplarisch dargestellt ist. Die mehrlagige Leiterplatte 8 weist insgesamt sechs Lagen auf, die in der Fig. 2 mit a, b, c, d, e und f bezeichnet sind. Die einzelnen Lagen a bis f sind auf Leiterplattenmaterial aufgebracht, das in der Fig. 2 zwecks einer besseren Übersichtlichkeit mittels voneinander abweichender Texturen symbolisiert ist. Der Stator des in der Fig. 1 teilweise dargestellten Winkelerfassungsmittels ist auf den Lagen a und b der Leiterplatte 8 angeordnet und der Stator des in Fig. 1 nicht dargestellten Winkelerfassungsmittels ist auf den Lagen e und f der Leiterplatte 8 angeordnet. Auf den Lagen c und d der Leiterplatte 8 ist zum einen das Indexierungsmittel angeordnet. Zum anderen sind die Lagen c und d der Leiterplatte 8 zusätzlich als Abschirmung ausgebildet, mittels der eine ungewünschte Wechselwirkung zwischen den als induktive Sensoren ausgebildeten Winkelerfassungsmitteln zumindest reduziert ist, dessen Statoren auf den Lagen a und b sowie auf den Lagen e und f der Leiterplatte 8 angeordnet sind. In Fig. 2 sind lediglich die Lagen a bis f dargestellt, nicht aber die Statoren und das Indexierungsmittel.

Im Nachfolgenden wird die erfindungsgemäße Vorrichtung gemäß dem ersten Ausführungsbeispiel und anhand der Fig. 1 bis 3 näher erläutert.

Bei einer Drehung der Lenkwelle, beispielsweise durch einen Lenkeingriff eines Fahrzeugführers des Kraftfahrzeugs, dreht sich die Lenkwelle zum einen relativ zu der Referenzposition 5, so dass mittels des einen Winkelerfassungsmittels, das in Fig. 1 teilweise dargestellt ist, der Drehwinkel der Lenkwelle auf dem Fachmann bekannte Weise bestimmt werden kann. Zum anderen verdrehen sich die beiden Teile der Lenkwelle zueinander, was zu einer Torsion des Torsionsstabes führt, so dass mittels der Bestimmung des Differenzwinkels zwischen dem mittels des vorgenannten Winkelerfassungsmittels erfassten Winkels und dem mittels des nicht dargestellten Winkelerfassungsmittel erfassten Winkels auf dem Fachmann bekannte Weise das in die Lenkwelle eingeleitete Drehmoment bestimmt werden kann. Bei der Winkelbestimmung mittels des in der Fig. 1 teilweise dargestellten Winkelerfassungsmittels ist die in dem einen Flügel 2.2 angeordnete Öffnung 6, also die mittels des Indexierungsmittels detektierbare Markierung, nicht hinderlich, da der für den induktiven Sensor relevante Stromfluss der in der Fig. 3 dargestellten Geometrie folgt. Wie daraus ersichtlich ist, fließt der Strom entlang der in der Bildebene von Fig. 1 und 3 dargestellten Außenkontur des Rotors 2. Der für die induktive Sensorik der beiden Winkelerfassungsmittel erforderliche Stromfluss wird also durch die Öffnung 6 nicht behindert.

Die Öffnung 6, also die Markierung, ist mittels des Indexierungsmittels detektierbar. Entsprechend lassen sich mittels des Indexierungsmittels jeweils 360°-Drehungen des drehenden Teils, also der Lenkwelle, detektieren und so auch Drehwinkel der Lenkwelle von 360° und mehr erfassen. Beispielsweise kann dies immer dann erfolgen, wenn der Flügel 2.2 des Rotors 2 mit der Öffnung 6 die Referenzposition 5 passiert.

Während sich der Rotor 2 in Wirkverbindung mit dem Indexierungsmittel um eine Drehachse 3 des Rotors 2 dreht, lässt sich ein vollständiger Umlauf des Rotors 2 und damit der Lenkwelle um die gemeinsame Drehachse 3 ermitteln. In Abhängigkeit der Detektierung der mittels des Indexierungsmittels detektierbaren Markierung 6 lässt sich somit in einer nicht dargestellten Auswerteeinheit eine 360°-Drehung des drehenden Teils, nämlich der Lenkwelle, relativ zu der Referenzposition 5 ermitteln.

Im Nachfolgenden ist ein weiteres Ausführungsbeispiel exemplarisch erläutert. Gleiche oder gleichwirkende Bauteile sind mit den gleichen Bezugszeichen wie bei dem ersten Ausführungsbeispiel versehen. Das folgende Ausführungsbeispiel wird lediglich im Umfang der Unterschiede zu dem ersten Ausführungsbeispiel erläutert. Ansonsten wird auf die Ausführungen zu dem ersten Ausführungsbeispiel verwiesen.

Fig. 4 zeigt ein zweites Ausführungsbeispiel der erfindungsgemäßen Vorrichtung. Im Wesentlichen entspricht das zweite Ausführungsbeispiel dem ersten Ausführungsbeispiel, so dass auf die obigen Ausführungen weitestgehend verwiesen wird. Im Unterschied zu dem ersten Ausführungsbeispiel weisen alle Flügel 2.2 bis auf einen einzigen Flügel 2.2 des Rotors 2 eine von einem umlaufenden Rand begrenzte Öffnung auf. Der Rotor 2 des zweiten Ausführungsbeispiels ist somit zu dem Rotor 2 des ersten Ausführungsbeispiels invers ausgebildet. Entsprechend wirkt bei dem zweiten Ausführungsbeispiel der einzige Flügel 2.2 ohne Öffnung als eine mittels des Indexierungsmittels detektierbare Markierung 6. Im Übrigen entspricht der Aufbau und die Funktionsweise des zweiten Ausführungsbeispiels dem des ersten Ausführungsbeispiels. Somit lässt sich auch hier in Abhängigkeit der Detektierung der mittels des Indexierungsmittels detektierbaren Markierung 6 in der Auswerteeinheit 16 eine 360°-Drehung des drehenden Teils, nämlich der Lenkwelle, relativ zu der Referenzposition 5 ermitteln.

Die Erfindung ist nicht auf die vorliegenden Ausführungsbeispiele begrenzt. Beispielsweise können Drehwinkel und/oder Drehmoment auch von anderen sich drehenden Teilen mittels der erfindungsgemäßen Vorrichtung vorteilhaft ermittelt werden. Anstelle Drehwinkel und Drehmoment zu erfassen kann auch lediglich der Drehwinkel oder das Drehmoment detektiert werden. Auch ist die Erfindung auch auf anderen Anwendungsgebieten abseits der Automobilindustrie einsetzbar.

Wie bereits erläutert, ist das mindestens eine Winkelerfassungsmittel sowie das mindestens eine Indexierungsmittel in weiten geeigneten Grenzen frei wählbar. Insbesondere vorteilhaft ist, dass das Winkelerfassungsmittel eine erste Betriebsfrequenz und das Indexierungsmittel eine zweite Betriebsfrequenz aufweist, wobei sich die erste Betriebsfrequenz und die zweite Betriebsfrequenz voneinander unterscheiden. Beispielsweise könnte die erste Betriebsfrequenz 3-4 MHz und die zweite Betriebsfrequenz 6-8 MHz betragen. Auch bei einer Mehrzahl von induktiven Winkelerfassungsmitteln wäre diese Weiterbildung der erfindungsgemäßen Anordnung vorteilhaft einsetzbar.

Die Komponenten des mindestens einen Winkelerfassungsmittels und des mindestens einen Indexierungsmittels müssen nicht zwingend zumindest teilweise auf einer einzigen Leiterplatte, insbesondere einer mehrlagigen Leiterplatte, angeordnet sein. Je nach den Erfordernissen des Einzelfalls können die Komponenten des mindestens einen Winkelerfassungsmittels und des mindestens einen Indexierungsmittels auch auf voneinander verschiedenen Leiterplatten oder dergleichen, einlagig oder mehrlagig, angeordnet sein.

## Patentansprüche

1. Vorrichtung zur Bestimmung eines Drehwinkels und/oder eines Drehmoments eines sich drehenden Teils, umfassend mindestens ein als induktiver Sensor ausgebildetes Winkelerfassungsmittel zur Erfassung einer Winkelstellung des sich drehenden Teils relativ zu einer Referenzposition (5) und mindestens ein Indexierungsmittel zum Indexieren bei einer vorher festgelegten Drehung, bevorzugt einer 360°-Drehung, des drehenden Teils relativ zu der Referenzposition (5), wobei das Winkelerfassungsmittel einen mit dem drehenden Teil drehfest verbundenen Rotor (2), mit einem Grundkörper (2.1) zur Befestigung an dem drehenden Teil und mehreren sich von dem Grundkörper (2.1) radial nach außen erstreckenden Flügeln (2.2), aufweist, und wobei mindestens einer der Flügel (2.2) des Rotors (2) eine mittels des Indexierungsmittels detektierbare Markierung (6) aufweist, **dadurch gekennzeichnet, dass** das Indexierungsmittel als ein kapazitiver Sensor ausgebildet ist und ein einziger Flügel (2.2) des Rotors (2) eine mittels des Indexierungsmittels detektierbare Markierung (6) aufweist, wobei ein einziger Flügel (2.2) eine von einem umlaufenden Rand begrenzte Öffnung (6) als die mittels des Indexierungsmittels detektierbare Markierung aufweist oder alle Flügel (2.2) bis auf einen einzigen Flügel (2.2), als die mittels des Indexierungsmittels detektierbare Markierung (6), eine von einem umlaufenden Rand begrenzte Öffnung aufweisen.

2. Vorrichtung nach Anspruch 1, wobei das Winkelerfassungsmittel und das Indexierungsmittel jeweils zumindest teilweise auf einer gemeinsamen Leiterplatte (8) angeordnet sind,
**dadurch gekennzeichnet,**
**dass** die Leiterplatte (8) als eine mehrlagige Leiterplatte (8) ausgebildet ist und das Winkelerfassungsmittel auf mindestens einer ersten Lage (a, b; e, f) der Leiterplatte (8) und das Indexierungsmittel auf mindestens einer von der ersten Lage (a, b; e, f) verschiedenen zweiten Lage (c, d) der Leiterplatte (8) angeordnet ist.

3. Vorrichtung nach Anspruch 2,
**dadurch gekennzeichnet,**
**dass** mindestens eine der mindestens einen zweiten Lage (c, d) als eine Abschirmung ausgebildet ist.

4. Verfahren zum Betrieb der Vorrichtung nach einem der Ansprüche 1 bis 3, wobei in Abhängigkeit der Detektierung der mittels des Indexierungsmittels detektierbaren Markierung (6) in einer Auswerteeinheit eine 360°-Drehung des drehenden Teils relativ zu der Referenzposition (5) ermittelt wird, und wobei zur Ermittlung einer vorher festgelegten Drehung, bevorzugt einer 360°-Drehung, des drehenden Teils relativ zu der Referenzposition (5) in der Auswerteeinheit mindestens eine Resonanzfrequenz mindestens eines Schwingkreises ausgewertet wird.

5. Verfahren nach Anspruch 4,
**dadurch gekennzeichnet,**
**dass** in der Auswerteeinheit mindestens eine Resonanzfrequenzdifferenz von zwei Schwingkreisen ausgewertet wird.

## Claims

1. Device for determining a rotation angle and/or a torque of a rotating part, comprising at least one angle detection means designed as an inductive sensor for detecting an angle position of the rotating part relative to a reference position (5) and at least one means of indexing for indexing at a predetermined rotation, preferentially a 360° rotation of the rotating part relative to the reference position (5), where the angle detection means features a rotor (2) connected in a torque-proof manner to the rotating part, with a base body (2.1) for fastening to the rotating part and several blades (2.2) extending radially outwards from the base body (2.1), and where at least one of the blades (2.2) of the rotor (2) features a marking (6) that can be detected by the means of indexing, **characterized in that** the means of indexing is designed as a capacitive sensor and a single blade (2.2) of the rotor (2) features a marking (6) that can be detected by the means of indexing, where a single blade (2.2) features an aperture (6) delimited by a surrounding border as being the marking that can be detected by the means of indexing or all blades (2.2) apart from one single blade (2.2) feature an aperture delimited by a surrounding border as being the marking (6) that can be detected by the means of indexing.

2. Device in accordance with claim 1, where the angle detection means and the means of indexing are each at least partially arranged on a shared printed circuit board (8), **characterized in that** the printed circuit board (8) is designed as a multilayer circuit board (8) and the angle detection means is arranged on at least one first layer (a, b; e, f) of the printed circuit board (8) and the means of indexing is arranged on at least one second layer (c, d) of the printed circuit board (8) differing from the first layer (a, b; e, f).

3. Device in accordance with claim 2, **characterized in that** at least of the at least one second layer (c, d) is designed as a shielding.

4. Method for operating the device in accordance with one of claims 1 through 3, where a 360° rotation of the rotating part relative to the reference position (5) is determined in an evaluation unit depending on the detection of the marking (6) that can be detected by the means of indexing, and where at least one resonance frequency of at least one oscillating circuit is evaluated in the evaluation unit for determining a predetermined rotation, preferentially a 360° rotation of the rotating part relative to the reference position (5).

5. Method in accordance with claim 4, **characterized in that** at least one resonance frequency difference of two oscillating circuits is evaluated in the evaluation unit.

## Revendications

1. Dispositif pour la détermination d'un angle et/ou couple de rotation d'une pièce rotative, comprenant au moins un moyen de détection d'angle conçu comme capteur inductif pour détecter une position angulaire de la pièce rotative par rapport à une position de référence (5) et au moins un moyen d'indexation pour l'indexation lors d'une rotation prédéfinie, de préférence une rotation de 360°, de la pièce rotative par rapport à la position de référence (5), le moyen de détection d'angle comprenant un rotor (2) relié à la pièce rotative de manière ferme, avec un corps de base (2. 1) pour la fixation à la pièce rotative et plusieurs pales (2.1) s'étendant radialement vers l'extérieur à partir du corps de base (2.1) et au moins une des pales (2.2) du rotor (2) présentant un marquage (6) détectable avec le moyen d'indexation, **caractérisé en ce que** le moyen d'indexation est conçu comme un capteur capacitif et qu'une seule pale (2.2) du rotor (2) présente un marquage (6) détectable avec le moyen d'indexation, une seule pale (2.2) présentant une ouverture (6) délimitée par un bord périphérique en tant que marquage détectable avec le moyen d'indexation ou toutes les pales (2.2), à l'exception d'une seule pale (2.2), présentant une ouverture délimitée par un bord périphérique comme marquage (6) détectable avec le moyen d'indexation.

2. Dispositif selon la revendication 1, le moyen de détection angulaire et le moyen d'indexation étant respectivement disposés au moins partiellement sur une carte de circuit imprimé commune (8), **caractérisé en ce que** la carte de circuit imprimé (8) est conçue comme une carte de circuit imprimé (8) à plusieurs couches et **en ce que** le moyen de détection angulaire est disposé sur au moins une première couche (a, b ; e, f) de la carte de circuit imprimé (8) et le moyen d'indexation sur au moins une deuxième couche (c, d) différente de la première couche (a, b ; e, f) de la carte de circuit imprimé (8).

3. Dispositif selon la revendication 2, **caractérisé en ce qu'**au moins une deuxième couche (c, d) est conçue comme un blindage.

4. Procédé pour l'utilisation du dispositif selon l'une des revendications 1 à 3, dans lequel une rotation de 360° de la pièce rotative par rapport à la position de référence (5) est déterminée dans une unité d'évaluation en fonction de la détection du marquage (6) détectable avec le moyen d'indexation et dans lequel au moins une fréquence de résonance d'au moins un circuit oscillant est analysée dans l'unité d'évaluation pour déterminer une rotation prédéterminée, de préférence une rotation de 360°, de la pièce rotative par rapport à la position de référence (5).

5. Procédé selon la revendication 4, **caractérisé en ce qu'**au moins une différence de fréquence de résonance de deux circuits oscillants est analysée dans l'unité d'évaluation.
